# EUROPEAN PATENT APPLICATION

(11) **EP 4 575 861 A1**
(43) Date of publication of application: **25.06.2025**
(21) Application number: 23862012.4
(22) Date of filing: 29.06.2023
(51) Int. Cl.: G06F 21/57, G06F 9/54

(54) **DATA PROCESSING METHOD, TERMINAL DEVICE AND READABLE STORAGE MEDIUM**

(30) Priority: 07.09.2022 CN 202211091500
(71) Applicant: Huawei Technologies Co., Ltd., Shenzhen, Guangdong 518129 (CN)
(72) Inventor: CHENG, Kun, Shenzhen, Guangdong 518129 (CN); WANG, Yu, Shenzhen, Guangdong 518129 (CN); LUO, Ruiping, Shenzhen, Guangdong 518129 (CN); WANG, Cheng, Shenzhen, Guangdong 518129 (CN)
(74) Representative: Körber, Martin Hans
(86) International application number: PCT/CN2023/103965
(87) International publication number: WO 2024/051311

(57) **Abstract**

Embodiments of this application relate to the field of computer technologies, and provide a data processing method, a terminal device, and a readable storage medium. An REE and a TEE are deployed in the terminal device. The data processing method includes: storing, in the REE, an ecall task initiated by a CA through a first thread into a shared memory; obtaining, in the TEE, the ecall task from the shared memory; and executing, by a TA in the TEE, the ecall task through a second thread, and storing a task result into the shared memory. The shared memory is pre-applied in the REE for the CA and can be accessed by the REE and the TEE. The second thread is created in the TEE. The second thread and the first thread are bound to different processing units. The shared memory is pre-applied, to avoid data copy. Processing units bound to threads that execute the ecall task in the REE and the TEE are different, and the second thread is created in the TEE, to reduce switching overheads, and improve data processing efficiency.

## Description

This application claims priority to Chinese Patent Application No. 202211091500.1, filed with the China National Intellectual Property Administration on September 7, 2022 and entitled "DATA PROCESSING METHOD, TERMINAL DEVICE, AND READABLE STORAGE MEDIUM", which is incorporated herein by reference in its entirety.

### TECHNICAL FIELD

Embodiments of this application relate to the field of computer technologies, and in particular, to a data processing method, a terminal device, and a readable storage medium.

### BACKGROUND

With development of the mobile Internet, terminal devices are used widely. A security framework represented by ARM TrustZone is used, to ensure security of data in a terminal device. ARM stands for an advanced reduced instruction set computing machine (advanced RISC machine). RISC stands for a reduced instruction set computer (reduced instruction set computer). TrustZone stands for a trust zone.

In the ARM TrustZone framework, software and hardware resources of a terminal device are divided into two worlds: a secure world (secure world) and a normal world (normal world). An execution environment corresponding to the secure world is referred to as a trusted execution environment (trusted execution environment, TEE), and a trusted application (trusted application, TA) is run in the TEE. An execution environment corresponding to the normal world is referred to as a rich execution environment (rich execution environment, REE), and a common application (common application, CA) runs in the REE. The REE and the TEE are isolated from each other, and the TEE has a higher security requirement.

Currently, overheads for data transfer between the REE and the TEE are very high, and data processing efficiency is very low.

### SUMMARY

Embodiments of this application provide a data processing method, a terminal device, and a readable storage medium, to improve data processing efficiency.

According to a first aspect, a data processing method is provided, applied to a terminal device, where a trusted execution environment and an untrusted execution environment are deployed in the terminal device, and the method includes: storing, in a first execution environment, a task initiated by a first application through a first thread into a shared memory, where the task is used to call a software function provided by a second application in a second execution environment, the shared memory is a physical memory region that is applied for the first application in advance in the untrusted execution environment and that is used to be accessed by the untrusted execution environment and the trusted execution environment, and the first execution environment is the untrusted execution environment, and the second execution environment is the trusted execution environment, or the first execution environment is the trusted execution environment, and the second execution environment is the untrusted execution environment; obtaining, in the second execution environment, the task from the shared memory; allocating a second thread to the task in the second execution environment, where the second thread is created in the second execution environment, and the second thread and the first thread are bound to different processing units; and the second application executes, in the second execution environment, the task through the second thread, to obtain a task result, and storing the task result into the shared memory.

According to the data processing method provided in the first aspect, the shared memory is applied for the first application in advance in the first execution environment, and related data for executing a task and the like are stored into the shared memory. The trusted execution environment and the untrusted execution environment complete data transfer by accessing the shared memory, and do not need to copy the data for a plurality of times. This shortens a data transmission path between the trusted execution environment and the untrusted execution environment, and improves data processing efficiency. In addition, because the first thread used by the first application to initiate the task and the second thread used by the second application to execute the task are bound to different processing units, the processing unit bound to the first thread does not need to perform CPU mode switching. This reduces CPU switching overheads and improves processing efficiency. In addition, because the second thread is created in the second execution environment, the processing unit bound to the second thread can execute, in the second execution environment without performing CPU mode switching, the task initiated by the first application. This reduces CPU switching overheads and improves processing efficiency.

In a possible implementation, the storing, in the first execution environment, the task into the shared memory includes: serializing the task in the first execution environment to obtain a serialized message of the task; storing, in the first execution environment, the serialized message of the task in a message queue, where the message queue is stored into the shared memory and is used to store serialized messages respectively corresponding to a plurality of tasks initiated by the first application; and setting, in the first execution environment, an execution flag bit of the serialized message of the task to a first value, where the first value indicates that a state of the serialized message is a to-be-executed state.

In this implementation, the execution flag bit of the task is set to the first value, to indicate that the task has not been processed, so that the second execution environment can quickly obtain the task that has not been processed. This improves processing efficiency.

In a possible implementation, the obtaining, in the second execution environment, the task from the shared memory includes: accessing, in the second execution environment, the message queue, and obtaining the serialized message of the task whose execution flag bit is the first value; and parsing, in the second execution environment, the serialized message of the task to obtain the task.

In a possible implementation, after that the second application executes, in the second execution environment, the task through the second thread, to obtain a task result, and stores the task result into the shared memory, the method further includes: setting, in the second execution environment, the execution flag bit of the serialized message of the task to a second value, where the second value indicates that the state of the serialized message is an executed state.

In this implementation, the execution flag bit of the task is set to the second value, to indicate that the task has been processed, so that the first execution environment can quickly learn of the state of the task. This improves processing efficiency.

In a possible implementation, before the storing, in a first execution environment, a task initiated by a first application through a first thread into a shared memory, the method further includes: The first application program initiates, in the first execution environment, the task through the first thread, and registers a callback function.

In this implementation, by registering the callback function, after initiating the task, the first application does not need to wait for the task result, but may perform subsequent application service logic processing through the first thread. This shortens waiting time after the first application initiates the task, and resolves a problem that execution of the task in the second execution environment blocks execution of a service logic of the first application.

In a possible implementation, the method further includes: calling, in the first execution environment, the callback function through a third thread, where the third thread is different from the first thread.

In this implementation, the third thread calls the callback function, so that processing of an outgoing parameter and a return value of the function that are returned by a TEE side can be automatically completed.

In a possible implementation, a quantity of the third threads is less than or equal to a quantity of tasks initiated by the first application.

In a possible implementation, the task includes an incoming parameter and an outgoing parameter, and the incoming parameter and the outgoing parameter are stored into the shared memory; and before the storing, in a first execution environment, a task initiated by a first application through a first thread into a shared memory, the method further includes: obtaining, in the first execution environment, a first reference address of the shared memory in the first execution environment, a first input address of the incoming parameter in the first execution environment, and a first output address of the outgoing parameter in the first execution environment; and converting, in the first execution environment, the first input address into a first input offset relative to the first reference address, and converting the first output address into a first output offset relative to the first reference address.

In a possible implementation, before that the second application executes, in the second execution environment, the task through the second thread, the method further includes: obtaining, in the second execution environment, a second reference address of the shared memory in the second execution environment; and obtaining, in the second execution environment, a second input address of the incoming parameter in the second execution environment based on the second reference address and the first input offset, and obtaining a second output address of the outgoing parameter in the second execution environment based on the second reference address and the first output offset.

In a possible implementation, the first execution environment is the trusted execution environment, the second execution environment is the untrusted execution environment, and the task is an ocall task.

In a possible implementation, the first execution environment is the untrusted execution environment, the second execution environment is the trusted execution environment, and the task is an ecall task.

In a possible implementation, a thread pool is established in the second execution environment for the first application, the thread pool includes a plurality of threads, and the threads in the thread pool are created in the second execution environment; and the second thread is an idle thread in the thread pool.

In a possible implementation, the method further includes: obtaining, in the second execution environment, a first quantity of idle threads in the thread pool; obtaining, in the second execution environment, a second quantity of tasks that are not executed in at least one task initiated by the first application; and adjusting, in the second execution environment, a quantity of threads in the thread pool based on the first quantity and the second quantity.

In this implementation, the quantity of threads in the thread pool is adjusted in real time based on the first quantity of idle threads in the thread pool and the second quantity of unprocessed tasks. This avoids a waste of a CPU and improves data processing efficiency.

In a possible implementation, the adjusting, in the second execution environment, a quantity of threads in the thread pool based on the first quantity and the second quantity includes: destroying, in the second execution environment, one thread in the thread pool if the first quantity is greater than the second quantity and the total quantity of threads in the thread pool is greater than a minimum threshold; or creating, in the second execution environment, at least one thread in the thread pool if the first quantity is less than the second quantity and the total quantity of threads in the thread pool is less than a maximum threshold, where a quantity of the at least one thread is less than or equal to a difference between the maximum threshold and the total quantity of threads in the thread pool.

In a possible implementation, before the storing, in a first execution environment, a task initiated by a first application through a first thread into a shared memory, the method further includes: sending, in the first execution environment, a minimum threshold, a maximum threshold, and an intermediate threshold to the second execution environment, where the intermediate threshold is greater than the minimum threshold and less than the maximum threshold; and establishing, in the second execution environment, the thread pool for the first application, where a quantity of threads in the thread pool is the intermediate threshold.

In a possible implementation, before the storing, in a first execution environment, a task initiated by a first application through a first thread into a shared memory, the method further includes: obtaining, in the first execution environment, a memory size of the shared memory; allocating, in the first execution environment, the shared memory based on the memory size; and sending, in the first execution environment, related information of the shared memory to the second execution environment.

In a possible implementation, the memory size includes a first memory size occupied by the message queue and a second memory size occupied by application data, and the message queue is stored into the shared memory and is used to store the serialized messages respectively corresponding to the plurality of tasks initiated by the first application; and the shared memory includes first memory space of the first memory size and second memory space of the second memory size.

In a possible implementation, addresses of the first memory space and the second memory space are contiguous.

According to a second aspect, a terminal device is provided. A trusted execution environment and an untrusted execution environment are deployed in the terminal device. A trusted application and a trusted processing module are deployed in the trusted execution environment. An untrusted application and an untrusted processing module are deployed in the untrusted execution environment. A first processing module in a first execution environment is configured to store a task initiated by a first application through a first thread into a shared memory, where the task is used to call a software function provided by a second application in a second execution environment, the shared memory is a physical memory region that is applied for the first application in advance in the untrusted execution environment and that is used to be accessed by the untrusted execution environment and the trusted execution environment. The first execution environment is the untrusted execution environment, the second execution environment is the trusted execution environment, the first processing module is an untrusted processing module, and the second processing module is a trusted processing module, or the first execution environment is the trusted execution environment, the second execution environment is the untrusted execution environment the first processing module is a trusted processing module, and the second processing module is an untrusted processing module. The second processing module in the second execution environment is configured to obtain the task from the shared memory. The second processing module in the second execution environment is configured to allocate a second thread to the task, where the second thread is created in the second execution environment, and the second thread and the first thread are bound to different processing units. The second application in the second execution environment is configured to execute the task through the second thread, to obtain a task result, and store the task result into the shared memory.

In a possible implementation, the first processing module in the first execution environment is configured to: serialize the task in the first execution environment to obtain a serialized message of the task; store, in the first execution environment, the serialized message of the task in a message queue, where the message queue is stored into the shared memory and is used to store serialized messages respectively corresponding to a plurality of tasks initiated by the first application; and set, in the first execution environment, an execution flag bit of the serialized message of the task to a first value, where the first value indicates that a state of the serialized message is a to-be-executed state.

In a possible implementation, the second processing module in the second execution environment is configured to: access, in the second execution environment, the message queue, and obtain the serialized message of the task whose execution flag bit is the first value; and parse, in the second execution environment, the serialized message of the task to obtain the task.

In a possible implementation, after that the second application executes the task through the second thread, to obtain a task result, and stores the task result into the shared memory, the second processing module in the second execution environment is further configured to: set, in the second execution environment, the execution flag bit of the serialized message of the task to a second value, where the second value indicates that the state of the serialized message is an executed state.

In a possible implementation, the first application in the first execution environment is configured to: initiate, in the first execution environment, the task through the first thread, and register a callback function.

In a possible implementation, the first processing module in the first execution environment is further configured to call, in the first execution environment, the callback function through a third thread, where the third thread is different from the first thread.

In a possible implementation, a quantity of the third threads is less than or equal to a quantity of tasks initiated by the first application.

In a possible implementation, the task includes an incoming parameter and an outgoing parameter, and the incoming parameter and the outgoing parameter are stored into the shared memory. The first processing module in the first execution environment is further configured to: before storing the task initiated by the first application through the first thread into the shared memory, obtain, in the first execution environment, a first reference address of the shared memory in the first execution environment, a first input address of the incoming parameter in the first execution environment, and a first output address of the outgoing parameter in the first execution environment; and convert, in the first execution environment, the first input address into a first input offset relative to the first reference address, and converting the first output address into a first output offset relative to the first reference address.

In a possible implementation, the second processing module in the second execution environment is further configured to: before that the second application executes the task through the second thread, obtain, in the second execution environment, a second reference address of the shared memory in the second execution environment; and obtain, in the second execution environment, a second input address of the incoming parameter in the second execution environment based on the second reference address and the first input offset, and obtain a second output address of the outgoing parameter in the second execution environment based on the second reference address and the first output offset.

In a possible implementation, the first execution environment is the trusted execution environment, the second execution environment is the untrusted execution environment, and the task is an ocall task.

In a possible implementation, the first execution environment is the untrusted execution environment, the second execution environment is the trusted execution environment, and the task is an ecall task.

In a possible implementation, a thread pool is established in the second execution environment for the first application, the thread pool includes a plurality of threads, and the threads in the thread pool are created in the second execution environment; and the second thread is an idle thread in the thread pool.

In a possible implementation, the second processing module in the second execution environment is further configured to: obtain, in the second execution environment, a first quantity of idle threads in the thread pool; obtain, in the second execution environment, a second quantity of tasks that are not executed in at least one task initiated by the first application; and adjust, in the second execution environment, a quantity of threads in the thread pool based on the first quantity and the second quantity.

In a possible implementation, the second processing module in the second execution environment is configured to: destroy, in the second execution environment, one thread in the thread pool if the first quantity is greater than the second quantity and the total quantity of threads in the thread pool is greater than a minimum threshold; or create, in the second execution environment, at least one thread in the thread pool if the first quantity is less than the second quantity and the total quantity of threads in the thread pool is less than a maximum threshold, where a quantity of the at least one thread is less than or equal to a difference between the maximum threshold and the total quantity of threads in the thread pool.

In a possible implementation, the first processing module in the first execution environment is further configured to: before storing the task initiated by the first application through the first thread into the shared memory, send, in the first execution environment, a minimum threshold, a maximum threshold, and an intermediate threshold to the second execution environment, where the intermediate threshold is greater than the minimum threshold and less than the maximum threshold. The second processing module in the second execution environment is further configured to establish, in the second execution environment, the thread pool for the first application, where a quantity of threads in the thread pool is the intermediate threshold.

In a possible implementation, the first processing module in the first execution environment is further configured to: before storing the task initiated by the first application through the first thread into the shared memory, obtain, in the first execution environment, a memory size of the shared memory; allocate, in the first execution environment, the shared memory based on the memory size; and send, in the first execution environment, related information of the shared memory to the second execution environment.

In a possible implementation, the memory size includes a first memory size occupied by the message queue and a second memory size occupied by application data, and the message queue is stored into the shared memory and is used to store the serialized messages respectively corresponding to the plurality of tasks initiated by the first application; and the shared memory includes first memory space of the first memory size and second memory space of the second memory size.

In a possible implementation, addresses of the first memory space and the second memory space are contiguous.

According to a third aspect, a terminal device is provided, including a processor. The processor is coupled to a storage, and reads instructions in the storage, to enable, based on the instructions, the terminal device to perform the method provided in the first aspect.

According to a fourth aspect, a program is provided. When being executed by a processor, the program is used to perform the method provided in the first aspect.

According to a fifth aspect, a computer-readable storage medium is provided. The computer-readable storage medium stores instructions, and when the instructions are run on a computer or a processor, the method provided in the first aspect is implemented.

According to a sixth aspect, a program product is provided, where the program product includes a computer program, the computer program is stored in a readable storage medium, at least one processor of a device may read the computer program from the readable storage medium, and the at least one processor executes the computer program, so that the device implements the method provided in the first aspect.

### BRIEF DESCRIPTION OF DRAWINGS

FIG. 1A and FIG. 1B are a group of diagrams of architectures of a terminal device according to an embodiment of this application;
FIG. 1C is a diagram of another architecture of a terminal device according to an embodiment of this application;
FIG. 2 is a diagram of another architecture of a terminal device according to an embodiment of this application;
FIG. 3A to FIG. 3D are a group of diagrams of a shared memory according to an embodiment of this application;
FIG. 4 is a flowchart of a data processing method according to an embodiment of this application;
FIG. 5 is another flowchart of a data processing method according to an embodiment of this application;
FIG. 6 is still another flowchart of a data processing method according to an embodiment of this application;
FIG. 7 is yet another flowchart of a data processing method according to an embodiment of this application; and
FIG. 8 is a diagram of a structure of a terminal device according to an embodiment of this application.

### DESCRIPTION OF EMBODIMENTS

The following describes embodiments of this application with reference to the accompanying drawings.

A data processing method provided in embodiments of this application is applied to a terminal device. A name of the terminal device is not limited in embodiments of this application. For example, the terminal device is also referred to as a terminal, an electronic device, a computer device, a computing device, a computer system, or the like. Common terminal devices include, for example, a mobile phone, a tablet computer, a laptop, a desktop computer, a server, a wearable device (for example, a smartwatch or a smart band), a smart home device (for example, a smart stereo or a smart television), an in-vehicle smart device, and an unmanned driving device, a virtual reality (virtual reality, VR) device, an augmented reality (augmented reality, AR) device, a mix reality (mix reality, MR) device, an artificial intelligence (artificial intelligence, AI) device, and the like.

First, to facilitate understanding of this application, related concepts are described.

### 1. Secure world and non-secure world

An operating system (operating system, OS) runs on a terminal device, an application (application, APP) is deployed on the OS, and the OS and the APP provide rich functions for the terminal device. With development of the mobile Internet, types and quantities of APPs are increasing, and a quantity of functions supported by the terminal device is also increasing. This imposes higher requirements on user privacy and information security.

To improve running security of the terminal device, software and hardware resources of the terminal device may be divided into two worlds, which are referred to as the secure world and the non-secure world. The secure world and the non-secure world are relative concepts. In the secure world, an operation that needs to be kept confidential is performed, and data that needs to be kept confidential is stored, for example, fingerprint recognition, facial recognition, password processing, data encryption and decryption, and security authentication are performed. Another operation is performed in the non-secure world.

It should be noted that names of the secure world and the non-secure world are not limited in embodiments of this application. For example, the secure world is also called a secure domain. The non-secure world is also referred to as a non-secure domain, a normal world (normal world), or a common world (common world). In different system architectures of the terminal device, names of the secure world and the non-secure world may be different.

### 2. Trusted execution environment, untrusted execution environment, trusted application, and untrusted application

The execution environment corresponding to the secure world is referred to as the trusted execution environment, and the execution environment corresponding to the non-secure world is referred to as the untrusted execution environment. The trusted execution environment and the untrusted execution environment are relative concepts. The trusted execution environment and the untrusted execution environment are isolated from each other, so that in the trusted execution environment, an operation that needs to be kept confidential can be performed, data that needs to be kept confidential is stored, and critical program logic, high-value data, and the like are protected.

The trusted application is deployed in the trusted execution environment, and the untrusted application is deployed in the untrusted execution environment. The trusted application and the untrusted application are relative concepts. For example, the trusted application includes but is not limited to a fingerprint recognition program, a facial recognition program, and the like.

It should be noted that names of the trusted execution environment, the untrusted execution environment, the trusted execution program, and the untrusted execution program are not limited in embodiments of this application. In different system architectures of the terminal device, names of these concepts may be different. For details, refer to subsequent descriptions of a GP architecture and an Intel SGX architecture.

### 3. Ecall task and ocall task

A behavior that is initiated in the untrusted execution environment and that is used to call a trusted execution environment function interface is referred to as an entry call (entry call, ecall) task or ecall call, and the called trusted execution environment function is referred to as an ecall function.

Correspondingly, a behavior that is initiated in the trusted execution environment and that is used to call an untrusted execution environment function interface is referred to as an out call (out call, ocall) task or ocall call, and the called untrusted execution environment function is referred to as an ocall function.

### 4. Program, application, process, and thread

The program (program) usually refers to a segment of executable code.

The application (application) includes a plurality of programs and may provide a specific function. For example, a fingerprint recognition application provides a fingerprint recognition function, and a facial recognition application provides a facial recognition function.

The process (process) is a running activity of a program and is a basic unit for an operating system to allocate resources. It can be understood that a running program is a process. The process has its own address space. One process may include one thread. In this case, the process is single-threaded. One process may also include a plurality of threads, and the plurality of threads may execute different tasks in parallel. In this case, the process is multi-threaded.

The thread (thread) is included in a process, and is a basic unit for the operating system to perform computing scheduling. It may be understood that a thread is a single-sequence control flow in the process. The thread is sometimes referred to as a light weight process (light weight process, LWP).

### 5. CPU binding

Central processing unit (central processing unit, CPU) binding refers to binding a process or a thread to a specified CPU core for execution in a multi-core CPU system.

CPU binding ensures that a process or a thread runs on a specified CPU core, avoids a CPU cache failure and cache hit ratio reduction caused by frequent scheduling and switching of applications between a plurality of CPU cores by the operating system, and improves CPU usage efficiency of the application.

### 6. GP, ARM TrustZone, TEE, REE, TA, and CA

The Global platform (Global Platform, GP) has developed an open architecture and an application programming interface (application programming interface, API) standard for the trusted execution environment. In the GP architecture, the non-secure world is referred to as the normal world or common world. A trusted execution environment corresponding to the secure world is referred to as the TEE, and an untrusted execution environment corresponding to the non-secure world is referred to as the REE. A trusted application running in the TEE is referred to as the TA, and an untrusted application running in the REE is referred to as the CA.

ARM TrustZone is an architecture developed based on the GP standard. Based on hardware security functions, ARM TrustZone introduces the secure world and the non-secure world at a processor layer. The processor runs only in one of the worlds at a time. When running in the secure world, the processor runs code of the secure world. When running in the non-secure world, the processor runs code of the non-secure world. The secure world and non-secure world are switched in a monitor mode (monitor mode). Hardware isolation between the secure world and the non-secure world provides an effective mechanism for protecting code and data of an application.

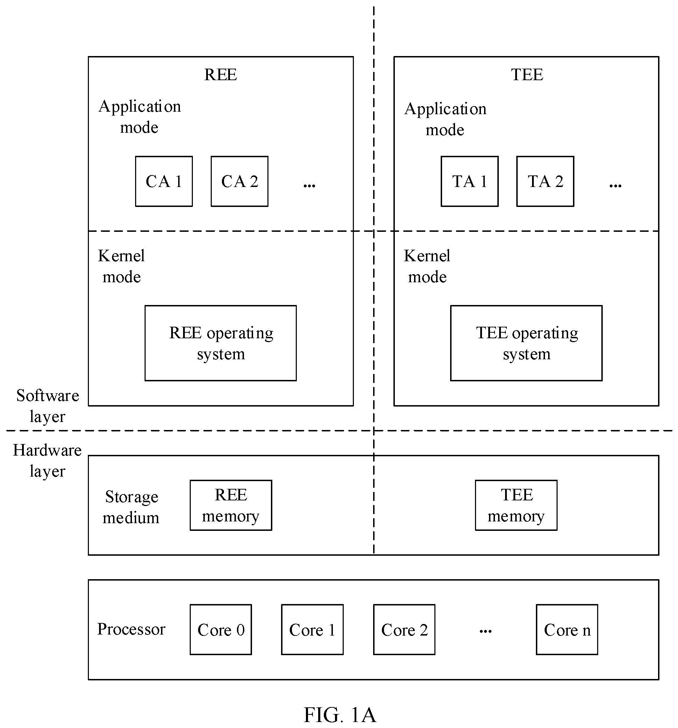

For example, FIG. 1A is a diagram of an architecture of a terminal device according to an embodiment of this application. The terminal device uses a GP architecture or an ARM TrustZone architecture. As shown in FIG. 1A, the terminal device includes a hardware layer and a software layer. The hardware layer includes but is not limited to a processor and a storage medium. The software layer includes an REE and a TEE. An REE operating system and a CA are deployed on an REE side. The REE operating system is also referred to as a rich operating system (rich operating system, Rich OS), for example, the existing Linux operating system or Windows operating system. A TEE operating system and a TA are deployed on a TEE side. The TEE operating system is also referred to as a trusted operating system (trusted operating system, Trusted OS).

Both the REE side and the TEE side include an application mode (or a user mode) and a kernel mode. The kernel mode on the REE side includes the REE operating system, and the application mode on the REE side includes the CA. The kernel mode on the TEE side includes the TEE operating system, and the application mode on the TEE side includes the TA.

The CA can initiate an ecall task and call an API provided by the TEE side to complete some secure and protected service logic. On the contrary, the TA can also initiate an ocall task and call an API provided by the REE side to complete some common service logic. For example, in some application scenarios such as terminal device unlocking, application login, and financial payment, the CA is an unlocking application or a financial payment application, and the TA is a fingerprint recognition application or a facial recognition application. The CA initiates the ecall task and calls the fingerprint recognition or facial recognition function provided by the TA on the TEE side. The CA and TA collaborate to unlock the terminal device, log in to an application, and perform fingerprint payment or facial recognition payment.

The REE and the TEE run in respective independent physical memories. In other words, the memories are isolated. The REE side cannot access the physical memory on the TEE side. On the contrary, the TEE side cannot access the physical memory on the REE side. For example, in FIG. 1A, a physical memory corresponding to the REE side is referred to as an REE memory, and a physical memory corresponding to the TEE side is referred to as a TEE memory.

The processor includes a plurality of processor cores, which are marked as a core 0 to a core n. At any moment, the processor core runs on the REE side or runs on the TEE side. For example, the core 0 runs in the REE and is in the REE mode or an REE state. The core 1 runs in the TEE and is in the TEE mode or a TEE state.

It should be noted that the processor includes a plurality of processing units. A type and a name of the processor, and a type, a name, and a quantity of processing units are not limited in embodiments of this application. For example, the processor is a CPU, and the processing unit is a CPU core (or a CPU core or a CPU kernel). The CPU core is an important part of the CPU, and is configured to complete computing, receive or store a command, process data, and the like.

The storage medium, also referred to as a storage, is configured to store executable program code and/or data. The executable program code may include instructions. The storage medium may include a program storage area and a data storage area. The storage medium may include a high-speed random access memory and a nonvolatile memory, for example, at least one magnetic disk storage device, a hard disk drive (hard disk drive, HDD), a solid state drive (solid state drive, SS), a flash memory device, or a universal flash storage (universal flash storage, UFS), and may further include a volatile memory (volatile memory), for example, a random access memory (random access memory, RAM).

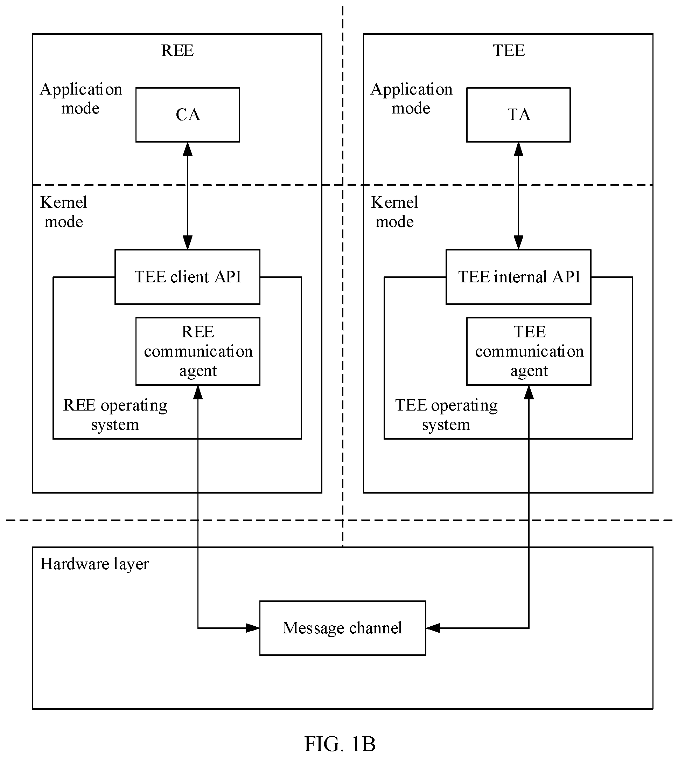

For example, refer to FIG. 1B. When the CA on the REE side initiates the ecall task, the CA exchanges data with the TA through an REE communication agent, a message channel at a hardware layer, and a TEE communication agent. The REE communication agent, the message channel, and the TEE communication agent establish a secure communication channel for the CA and the TA. Specifically, the CA calls a TEE client API to implement communication with a corresponding TA, and the TA calls a TEE internal API to implement a related function by using a programming resource provided by the TEE.

However, because the memory of the REE is isolated from the memory of the TEE, data transfer needs to depend on copy transfer between an operating system and the memory. As a result, data transfer between the CA and the TA undergoes a plurality of copies, and interaction overheads are high. In addition, the processor core (for example, the core 0) in which the CA that initiates the ecall task is located needs to switch from the REE mode to the TEE mode, and executes the ecall function in the TA in the TEE. After execution is completed, the core 0 switches back from the TEE mode to the REE mode. When the CA application continues to be executed in the REE, overheads of CPU switching are high, and data processing efficiency is low.

### 7. Intel (Intel) software guard execution (software guard execution, SGX) architecture

Intel SGX is a technology that meets trusted computing requirements. Similar to ARM TrustZone, Intel SGX can implement a trusted execution environment.

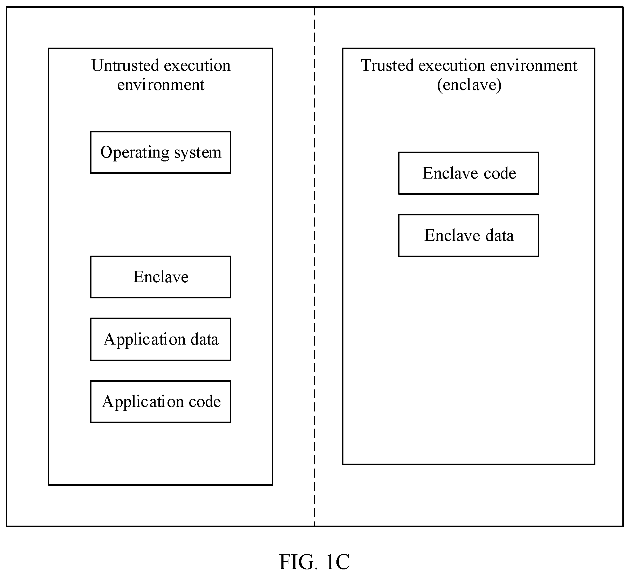

For example, FIG. 1C is a diagram of another architecture of a terminal device according to an embodiment of this application. The terminal device uses an Intel SGX architecture or an SGX architecture, and shows a software layer. As shown in FIG. 1C, an untrusted execution environment includes an operating system and an application. The operating system is, for example, a Linux operating system or a Windows operating system. The application may be divided into two parts: a secure part (or a trusted part and a trusted application) and a non-secure part (or an untrusted part and an untrusted application). When the application needs to process confidential data, the application creates a secure zone (referred to as enclave, a trusted zone, or a trusted execution environment) in the trusted memory to store enclave code and enclave data. A trusted function (also referred to as enclave function, which is created by a developer and executed in the secure zone) is then called. Once the trusted function is called, the application executes the function in the trusted zone and accesses the enclave code and enclave data in the secure zone in plaintext. In addition, a processor rejects all attempts to access the secure zone from outside the secure zone. After the trusted function is executed, the enclave data in the secure area is still retained in the trusted memory, and the application returns to an untrusted area (or the untrusted execution environment) to continue execution, and loses access permission to the trusted memory.

It can be learned that in the SGX architecture, the trusted execution environment is a part of a host process. This means that the application includes code (referred to as application code), data (referred to as application data), and enclave of the application. Refer to the left part in FIG. 1C. Enclave also includes its own code (referred to as enclave code) and its own data (referred to as enclave data). Refer to the right part in FIG. 1C. SGX can protect confidentiality and integrity of the enclave code and the enclave data.

For ease of description, in embodiments of this application, a GP architecture is used as an example to describe the data processing method provided in embodiments of this application.

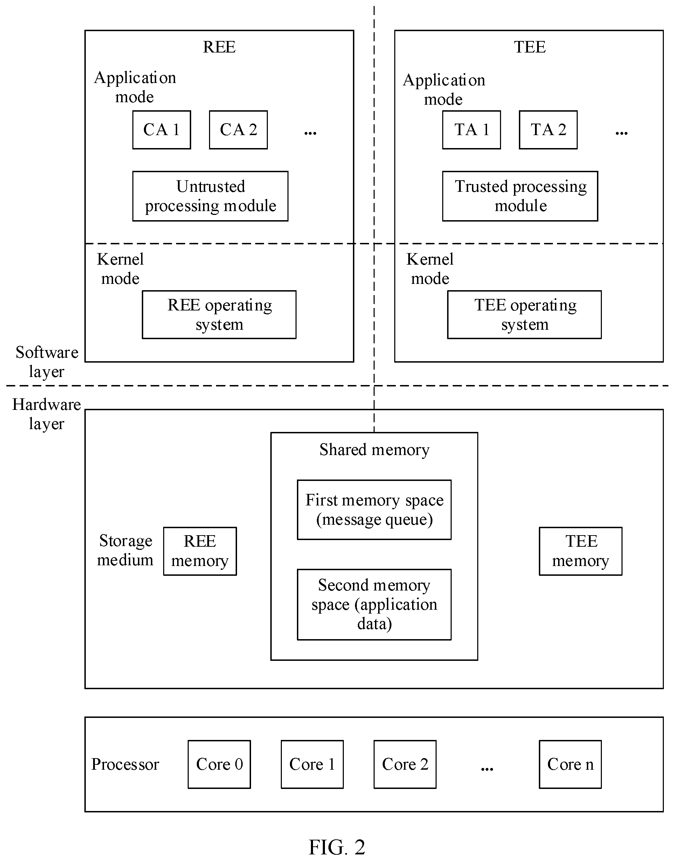

Based on the GP architectures shown in FIG. 1A and FIG. 1B, an embodiment of this application provides another architectural diagram of the terminal device. For example, FIG. 2 is a diagram of another architecture of a terminal device according to an embodiment of this application. In FIG. 2, a shared memory is added to a storage medium, an untrusted processing module is added to an application mode of an REE, and a trusted processing module is added to an application mode of a TEE. The untrusted processing module is configured to process, in the REE, related data in a process of initiating a task by an application in the REE or the TEE. The trusted processing module is configured to process, in the TEE, related data in a process of initiating a task by an application in the REE or the TEE.

Based on the GP architecture shown in FIG. 2, according to the data processing method provided in this embodiment of this application, an REE side and a TEE side may access data in the shared memory by applying for the shared memory in advance, so that data transfer between the REE side and the TEE side is completed, and a plurality of copies of the data are not required. This shortens a data transmission path between the REE and the TEE, and improves data processing efficiency. In addition, a thread on the REE side and a thread on the TEE side that execute a same task are bound to different processing units. The thread that is on the TEE side and that executes the task is created on the TEE side, thereby reducing CPU switching overheads and improving data processing efficiency.

The following describes concepts in embodiments of this application.

### 1. First execution environment, first application, second execution environment, and second application

In embodiments of this application, the first execution environment is an untrusted execution environment, and the second execution environment is a trusted execution environment; or the first execution environment is a trusted execution environment, and the second execution environment is an untrusted execution environment.

The first application is an application in the first execution environment, and the second application is an application in the second execution environment.

### 2. Task

In this embodiment of this application, the task is a software function that is initiated by the first application in the first execution environment through a first thread and that is used to call the second application in the second execution environment.

An example is used for description. It is assumed that the first execution environment is an REE, the first application is a CA, the second execution environment is a TEE, and the second application is a TA. In a scenario, a user uses a payment APP to perform payment through fingerprint recognition. In this scenario, the CA is a payment APP, and the TA is a fingerprint recognition application. In the REE, when the CA (payment APP) is running, an ecall task is initiated, and a fingerprint recognition function provided by the TA (fingerprint recognition application) in the TEE is called to complete fingerprint payment in the payment APP.

Optionally, the task includes the ecall task and the ocall task.

### 3. Shared memory, first memory space, and second memory space

In embodiments of this application, the shared memory is a memory region that is applied for the first application in advance in the untrusted execution environment and that is used for access by the untrusted execution environment and the trusted execution environment.

An example is used for description. It is assumed that the first execution environment is the REE, the first application is the CA, and the CA initiates the ecall task. Generally, physical memory management of the terminal device is performed by the untrusted execution environment. In the REE, a physical memory region is applied for in advance for the CA, and both the REE and the TEE can access the physical memory region. In this case, when initiating the ecall task, the CA may store related data of the ecall task into the shared memory, so that the TEE side may obtain the related data of the ecall task from the shared memory, and then execute the ecall task. Correspondingly, after the ecall task executed on the TEE side ends, a task result of the ecall task may be stored into the shared memory, so that the REE side may obtain the task result of the ecall task from the shared memory, to complete data transmission. Because data transmission is completed without data copy, data processing efficiency is improved.

The shared memory stores an incoming parameter and an outgoing parameter of a function called by a task.

Optionally, the shared memory may be a physical memory region that is applied for in advance for a task initiated by the first application in the untrusted execution environment and that is used for access by the untrusted execution environment and the trusted execution environment.

In this implementation, because the memory size of the shared memory is used to execute the task initiated by the first application, the shared memory is applied for in advance based on the task initiated by the first application, thereby improving rationality and accuracy of applying for the shared memory in advance, and improving memory resource utilization.

It should be noted that the memory size and a location of the shared memory are not limited in embodiments of this application. When there are different first applications, the memory size and the location of the shared memory may be different. For example, the first application includes a CA 1 and a CA 2. The memory size of the shared memory of the CA 1 is 5 MB, and a start address is 0x40000000. The memory size of the shared memory of the CA 2 is 1 MB, and a start address is 0x50000000.

Optionally, the memory size of the shared memory includes a first memory size occupied by a message queue and a second memory size occupied by application data. The message queue is used to store serialized messages respectively corresponding to a plurality of tasks initiated by the first application. The application data includes interaction data in a process of executing the task initiated by the first application. A name of the application data is not limited in embodiments of this application. For example, the application data may also be referred to as interaction data, task data, or shared data.

Optionally, the first memory size may be estimated based on a total quantity of tasks initiated by the first application. An example is used for description. It is assumed that the CA initiates 100 tasks, and a memory size occupied by each task in the message queue is 0.05 MB, the first memory size may be 100*0.05 MB=5 MB. Optionally, the first memory size may further include an anti-overflow capacity value. For example, if the anti-overflow capacity value is 1 MB, when the CA initiates the 100 tasks, the first memory size is: 100*0.05 MB+1 MB=6 MB.

Optionally, as shown in FIG. 2, the shared memory includes first memory space and second memory space. A size of the first memory space is the first memory size, and is used to store the message queue. A size of the second memory space is the second memory size, and is used to store the application data. Names of the first memory space and the second memory space are not limited in embodiments of this application. For example, the second memory space is also referred to as a data buffer.

Values of the first memory size and the second memory size are not limited in embodiments of this application, and start locations of the first memory space and the second memory space are not limited.

Optionally, to facilitate memory management, addresses of the first memory space and the second memory space are contiguous.

Optionally, when the first application declares an initialization configuration, at least one of the following may be included: the memory size of the shared memory, the first memory size, the second memory size, or the quantity of tasks initiated by the first application. In the untrusted execution environment, an API provided by the untrusted operating system may be called to apply for allocating the shared memory.

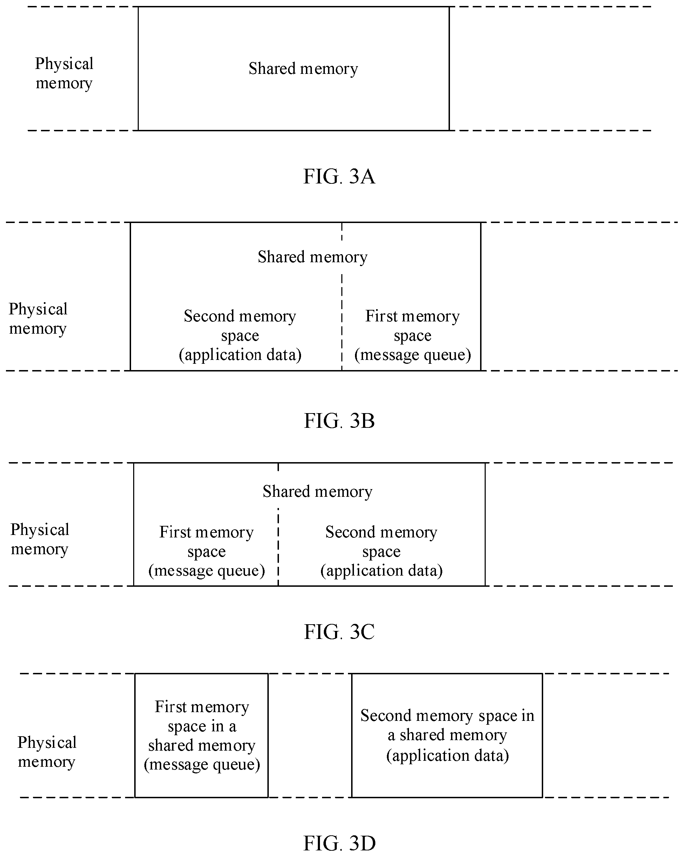

The following describes the shared memory by using an example with reference to FIG. 3A to FIG. 3D. It is assumed that the first application is the CA.

Optionally, in an implementation, as shown in FIG. 3A, in the REE, a physical memory region with contiguous addresses is applied for based on the memory size of the shared memory, and is used as the shared memory of the CA.

Optionally, in another implementation, as shown in FIG. 3B, in the REE, a physical memory region with contiguous addresses is applied for based on the first memory size, and is used as the first memory space in the shared memory of the CA, to store the message queue. A physical memory region with contiguous addresses is applied for based on the second memory size, and is used as the second memory space in the shared memory of the CA, to store the application data. The addresses of the first memory space and the second memory space are contiguous, and the first memory space is located after the address of the second memory space.

Optionally, in another implementation, as shown in FIG. 3C, the first memory space and the second memory space are respectively applied for based on the first memory size and the second memory size. A similarity between FIG. 3C and FIG. 3B lies in that the addresses of the first memory space and the second memory space are contiguous. A difference lies in that, in FIG. 3C, the first memory space is located before the address of the second memory space.

Optionally, in another implementation, as shown in FIG. 3D, the first memory space and the second memory space are respectively applied for based on the first memory size and the second memory size. A difference between FIG. 3D and FIG. 3B and FIG. 3C lies in that, in FIG. 3D, the addresses of the first memory space and the second memory space are not contiguous.

### 4. Message queue, serialization, and deserialization

The message queue is stored into the shared memory, and is used to store serialized messages respectively corresponding to a plurality of tasks initiated by the first application.

A quantity of tasks that can be stored in the message queue or a quantity of serialized messages that can be stored in the message queue is not limited in embodiments of this application. When applications are different, quantities of tasks initiated by the applications are usually different, and capacities of the message queues are different.

Serialization is a data processing mechanism. When a computing device performs an input/output (input/output, IO) operation, data needs to be read and written in a form of a stream. Serialization can convert an object into a byte stream that can be recognized by the computing device. Serialization can facilitate storage and transmission of the data.

An operation opposite to serialization is referred to as deserialization, and deserialization mean that the received byte stream is restored to an object that can be identified by a program.

In embodiments of this application, before the task is stored in the message queue, the task needs to be serialized, to generate a serialized message of the task. Correspondingly, after the serialized message corresponding to the task is extracted from the message queue, the serialized message corresponding to the task needs to be deserialized or parsed, to restore the task.

### 5. Thread pool, minimum threshold, intermediate threshold, and maximum threshold

In embodiment of this application, in the trusted execution environment, the thread pool is established for the untrusted application in the untrusted execution environment. The thread pool includes a plurality of threads, and all the threads in the thread pool are created in the trusted execution environment. The threads in the thread pool are used to execute an ecall task initiated by the untrusted application.

Optionally, a quantity of threads in the thread pool has a minimum value and a maximum value, which are respectively referred to as the minimum threshold and the maximum threshold. A quantity of minimum thresholds and a quantity of maximum thresholds are not limited in embodiments of this application. Based on the minimum threshold, it is ensured that a thread exists in the trusted execution environment to execute the ecall task initiated by the untrusted application, thereby avoiding a case in which the ecall task cannot be executed. Based on the maximum threshold, a maximum value of threads that execute, in the trusted execution environment, the ecall task initiated by the untrusted application is limited, thereby avoiding a resource waste caused by a small quantity of ecall tasks.

Optionally, the quantity of threads in the thread pool may be adjusted in real time between the minimum threshold and the maximum threshold based on a quantity of ecall tasks initiated by the untrusted application. The quantity of threads in the thread pool is adjusted in real time, to avoid a case in which no thread is available caused by a large quantity of ecall tasks initiated by the untrusted application, and avoid a resource waste caused by a small quantity of ecall tasks initiated by the untrusted application. This improves resource utilization on a trusted execution environment side, and improves ecall task processing efficiency.

Optionally, when the thread pool is initially established in the trusted execution environment, the quantity of threads in the thread pool may be the intermediate threshold, where the minimum threshold<the intermediate threshold<the maximum threshold.

Optionally, at least one of the minimum threshold, the maximum threshold, and the intermediate threshold may be set on a trusted execution environment side, or may be set on an untrusted execution environment side, or may be determined after mutual negotiation between the trusted execution environment side and the untrusted execution environment side.

Optionally, when untrusted applications in the untrusted execution environment are different, at least one of the minimum threshold, the maximum threshold, and the intermediate threshold corresponding to the thread pool may be the same, or may be different.

Descriptions are provided below by using examples.

It is assumed that the untrusted application includes a CA 1 and a CA 2. In the trusted execution environment, a thread pool 1 is established for the CA 1, and a corresponding minimum threshold, a corresponding maximum threshold, and a corresponding intermediate threshold are 2, 5, and 10 respectively. When threads are initially established, five threads are established for the CA 1. A thread pool 2 is established for the CA 2, and a corresponding minimum threshold, a corresponding maximum threshold, and a corresponding intermediate threshold are 3, 6, and 10, respectively. When the threads are initially established, six threads are established for the CA 2.

### 6. Callback function

The callback function is a function that is transferred as a parameter.

A process of using the callback function may include: (1) A callback function is defined. (2) During initialization, a party that provides the function implementation registers a function pointer of the callback function with a caller. (3) When a specific event or condition is met, the caller uses the function pointer to call the callback function to process the event.

Through the callback function, the pointer of the function to be called can be transferred to a function as a parameter, so that the function can flexibly use different methods when processing similar events.

The following describes in detail technical solutions of this application by using specific embodiments. The following embodiments may be combined with each other, and same or similar concepts or processes may not be repeatedly described in some embodiments.

Terms "first", "second", "third", "fourth", and the like (if any) in embodiments of this application are used to distinguish between similar objects, but not necessarily describe a specific order or sequence.

In embodiments of this application, a data processing method is provided, and is performed by a terminal device. A trusted execution environment and an untrusted execution environment are deployed in the terminal device. A manner of implementing the trusted execution environment by the terminal device is not limited in this embodiment. For example, the terminal device may use a GP architecture, or may use an SGX architecture. An application and a processing module are deployed in both the trusted execution environment and the untrusted execution environment. An application deployed in the trusted execution environment is referred to as a trusted application, and a processing module is referred to as a trusted processing module. An application deployed in the untrusted execution environment is referred to as an untrusted application, and a processing module is referred to as an untrusted processing module.

The data processing method provided in this embodiment is applicable to a scenario in which a first application of the terminal device initiates a task through a first thread in a first execution environment. For ease of description, an application deployed in the first execution environment is referred to as the first application, and a deployed processing module is referred to as a first processing module. An application deployed in the second execution environment is referred to as a second application, and a deployed processing module is referred to as a second processing module.

Optionally, in an implementation, the first execution environment is the untrusted execution environment, the first application is the untrusted application, the second execution environment is the trusted execution environment, the second application is the trusted application, and the task is an ecall task.

Optionally, in another implementation, the first execution environment is the trusted execution environment, the first application is the trusted application, the second execution environment is the untrusted execution environment, the second application is the untrusted application, and the task is an ocall task.

It may be understood that when the terminal device uses different architectures, and the first execution environment and the second execution environment are different, the data processing method provided in this embodiment may be applied to at least the following scenarios:
Scenario 1: The terminal device uses the GP architecture. Refer to the structure shown in FIG. 2. The first execution environment is an REE, the first application is a CA, the first processing module is an untrusted processing module, the second execution environment is a TEE, the second application is a TA, and the second processing module is a trusted processing module. The CA of the terminal device initiates, in the REE, an ecall task through a first thread.
Scenario 2: The terminal device uses the GP architecture. Refer to the structure shown in FIG. 2. The first execution environment is a TEE, the first application is a TA, the first processing module is a trusted processing module, the second execution environment is an REE, the second application is a CA, and the second processing module is an untrusted processing module. The TA of the terminal device initiates, in the TEE, an ocall task through a first thread.
Scenario 3: The terminal device uses the SGX architecture. Refer to the structure shown in FIG. 1C. The first execution environment is an untrusted execution environment, the first application is a non-secure part of an application, the first processing module is an untrusted processing module, the second execution environment is enclave, the second application is a secure part of an application, and the second processing module is a trusted processing module. The non-secure part of the application of the terminal device initiates the ecall task in the untrusted execution environment through the first thread.
Scenario 4: The terminal device uses the SGX architecture. Refer to the structure shown in FIG. 1C. The first execution environment is enclave, the first application is a secure part of an application, the first processing module is a trusted processing module, the second execution environment is an untrusted execution environment, the second application is a non-secure part of an application, and the second processing module is an untrusted processing module. In Enclave, the secure part of the application of the terminal device initiates the ocall task through the first thread.

For ease of description, in this embodiment, Scenario 1 is used as an example to describe the data processing method provided in this embodiment.

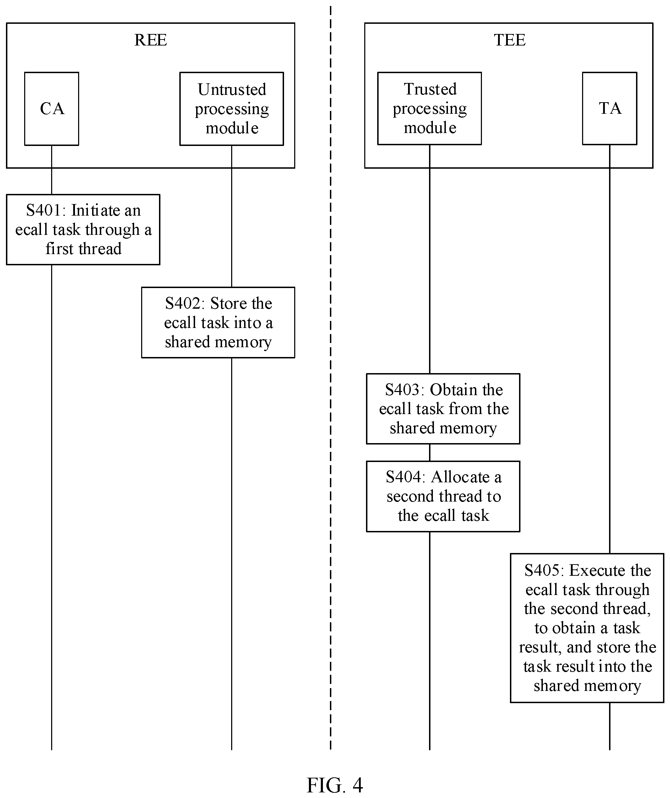

For example, FIG. 4 is a flowchart of a data processing method according to an embodiment of this application. As shown in FIG. 4, the data processing method provided in this embodiment may include the following steps.

S401: In an REE, a CA initiates an ecall task through a first thread.

Specifically, the CA initiates the ecall task, and calls a software function provided by a TA in a TEE. The first thread is created by the CA in the REE and is bound to a CPU core. The CPU core bound to the first thread is not limited in this embodiment. For example, the CPU includes a core 0 to a core 31, and the CPU core bound to the first thread is the core 0.

The ecall task may include but is not limited to the following information: a function name of a called ecall function, an incoming parameter, an outgoing parameter, and a return value type of the function.

S402: In the REE, an untrusted processing module stores the ecall task into a shared memory.

The shared memory is a memory region that is in the REE and that is applied for in advance for the CA and that is used for access by the REE and the TEE. For a meaning of the shared memory, refer to the foregoing related descriptions in this application. Details are not described herein again.

Storage locations of the incoming parameter and the outgoing parameter of the ecall function are also located in the shared memory.

Because both the REE and the TEE can access the shared memory, after the untrusted processing module stores the ecall task initiated by the CA into the shared memory, a TEE side may obtain the ecall task by accessing the shared memory. Therefore, data transfer from an REE side to the TEE side is completed without data copy, a data transmission path in the GP architecture is shortened, and data processing efficiency is improved.

S403: In the TEE, the trusted processing module obtains the task from the shared memory.

Specifically, the trusted processing module on the TEE side accesses the shared memory to obtain the task stored into the shared memory.

S404: In the TEE, the trusted processing module allocates a second thread to the ecall task.

The second thread is created in the TEE, and the second thread and the first thread are bound to different processing units.

Optionally, the processing unit is a CPU core of the processor. A CPU core bound to the second thread is not limited in this embodiment. For example, the CPU includes a core 0 to a core 31, and the CPU core bound to the second thread is the core 10.

In an implementation of the related technology, a CA on the REE side creates the second thread, and binds the second thread to the CPU core, for example, the core 10. Then, the core 10 bound to the second thread is switched from the REE side to the TEE side, and the core 10 is switched from an REE mode to a TEE mode.

However, in this embodiment, because the second thread is created on the TEE side, the processing unit (the core 10) bound to the second thread is initially in the TEE mode, and CPU switching does not need to be performed. This improves data processing efficiency.

S405: In the TEE, the TA executes the ecall task through the second thread, to obtain a task result, and stores the task result into the shared memory.

Specifically, the second thread may call a function entry provided by the TA, execute the ecall task, and write an outgoing parameter and a return value of the function into a shared area specified by a parameter in the ecall function.

The following describes this step by using an example. On the REE side, the thread used by the CA to initiate the ecall task is the first thread, and the bound processing unit is the core 0. On the TEE side, the thread used by the TA to execute the ecall function called by the ecall task is the second thread. The CPU core 10 is bound. Because the second thread and the first thread are bound to different CPU cores, when executing the ecall function, the TA does not need to switch the CPU core (core 0) bound to the first thread on the REE side to the TEE side. Therefore, CPU switching overheads are reduced, and processing efficiency is improved.

In addition, because both the REE and the TEE can access the shared memory, the TA stores the task result into the shared memory after executing the ecall task. The REE side may obtain the task result of the ecall task by accessing the shared memory. Therefore, data transfer from the TEE side to the REE side is completed without data copy, a data transmission path in the GP architecture is shortened, and data processing efficiency is improved.

It can be learned that in this embodiment, the GP architecture is used as an example to provide the data processing method, which is applicable to a scenario in which the first application of the terminal device initiates the task through the first thread in the first execution environment. The shared memory is applied for the first application in advance in the untrusted execution environment, and related data for task execution, for example, the incoming parameter and the outgoing parameter of the task call function, and the task result, is stored into the shared memory. The trusted execution environment and the untrusted execution environment complete data transfer by accessing the shared memory, and do not need to copy the data for a plurality of times. This shortens a data transmission path between the REE and the TEE, and improves data processing efficiency. In addition, because the first thread used by the first application to initiate the task and the second thread used by the second application to execute the task are bound to different processing units, the processing unit bound to the first thread does not need to perform CPU mode switching. This reduces CPU switching overheads and improves processing efficiency. In addition, because the second thread is created in the second execution environment, the processing unit bound to the second thread can execute, in the second execution environment without performing CPU mode switching, the task initiated by the first application. This reduces CPU switching overheads and improves processing efficiency.

Optionally, in the data processing method provided in this embodiment, before the untrusted processing module stores the ecall task into the shared memory in S402, the method may further include:
In the REE, the untrusted processing module obtains indication information of the ecall task. The indication information is used to determine whether the data processing method provided in this embodiment is used for the ecall task.

In the REE, the untrusted processing module determines, based on the indication information of the ecall task, whether the data processing method provided in this embodiment is used for the ecall task.

If it is determined that the data processing method provided in this embodiment is used for the ecall task, subsequent S403 to S405 are performed.

If it is determined that the data processing method provided in this embodiment is not used for the ecall task, processing is performed according to an existing ecall task processing procedure.

It can be learned that, whether the ecall task initiated by the CA performs the data processing method provided in this embodiment is determined by using the indication information of the ecall task, thereby improving compatibility between the data processing method provided in this embodiment and the existing ecall task processing procedure, and improving flexibility of data processing.

Optionally, the indication information may include at least one of the following: configuration information of the ecall task or a keyword of the ecall function called by the ecall task.

A keyword parameter of the function is a parameter sent by using syntax when the function is called. In this embodiment of this application, whether the ecall task initiated by the CA performs the data processing method provided in this embodiment may be determined by using a function call keyword method.

Optionally, in the data processing method provided in this embodiment, before the untrusted processing module stores the ecall task into the shared memory in S402, the method may further include:

In the REE, the untrusted processing module obtains a first reference address of the shared memory in the REE, a first input address of the incoming parameter in the REE, and a first output address of the outgoing parameter in the REE.

In the REE, the untrusted processing module converts the first input address into a first input offset relative to the first reference address, and converts the first output address into a first output offset relative to the first reference address.

The first reference address of the shared memory in the REE may reflect layout information of the shared memory in CA address space, for example, a start location and an offset. The ecall task further includes the first input offset and the first output offset.

Optionally, before the trusted processing module allocates the second thread to the task in S404, the data processing method provided in this embodiment may further include:

In the TEE, the trusted processing module obtains the second reference address of the shared memory in the TEE.

In the TEE, the trusted processing module obtains a second input address of the incoming parameter in the TEE based on a second reference address and the first input offset, and obtains a second output address of the outgoing parameter in the TEE based on the second reference address and the first output offset.

The second reference address of the shared memory in the TEE may reflect layout information of the shared memory in TA address space, for example, a start location and an offset.

Specifically, in the GP architecture, address spaces on the TEE side and the REE side are completely isolated. On the REE side, an REE operating system is responsible for address mapping of the shared memory. On the TEE side, a TEE operating system is responsible for address mapping of the shared memory. The shared memory is mapped to different areas of the CA process address and TA process address by different operating systems on the REE side and the TEE side. In this way, when the CA initiates the ecall task, the TA cannot access the incoming parameter, the outgoing parameter, and the like in the shared memory. Similarly, a parameter transferred by the TA in the shared memory cannot be accessed by the CA. Therefore, on the REE side, the address that is of the parameter and that is transferred by the CA and that is located in the shared memory is converted into an offset relative to the base address of the shared memory, so that on the TEE side, the address can be converted into an address in the TEE address space based on the offset of the parameter address. The TA can successfully access the address. Similarly, on the TEE side, the address that is of the parameter and that is transferred by the TA and that is located in the shared memory is converted into an offset relative to the base address of the shared memory, so that on the REE side, the address can be converted into an address in the REE address space based on the offset of the parameter address. The CA can successfully access the address.

Descriptions are provided below by using examples.

It is assumed that a first reference address of the shared memory in the REE is a start address of the shared memory in the CA address space, and is 0x40000000. A length is 1 MB. A first input address of the incoming parameter in the REE is 0x40001000, and a length is 8 bytes. In this case, an offset of the first input address of the incoming parameter in the REE relative to the first reference address of the shared memory in the REE is 0x40001000-0x40000000=0x1000, that is, the first input offset is 0x1000.

Optionally, before the offset of the address is calculated, it is determined whether the address of the incoming parameter exceeds a range of the memory address. For example, in this example, the length of the incoming parameter is 8 bytes, the first input address is 0x40001000, the length of the shared memory is 1 MB, the start address is 0x40000000, and the incoming parameter does not exceed the range of the memory address.

Correspondingly, it is assumed that a second reference address of the shared memory in the TEE is 0x32000000, and a length is 1 MB. It may be obtained, through calculation based on the second reference address 0x32000000 and the first input offset 0x1000 of the incoming parameter, that the second input address of the incoming parameter in the TEE is 0x32000000+0x1000=0x32001000.

Optionally, on the TEE side, after the second input address of the incoming parameter in the TEE is obtained, it may be determined whether the address of the incoming parameter exceeds the range of the memory address, to ensure that access to the shared memory does not exceed the range.

Optionally, in the data processing method provided in this embodiment, before the CA initiates the ecall task through the first thread in S401, the method may further include:

In the REE, the untrusted processing module obtains a memory size of the shared memory.

In the REE, the untrusted processing module pre-allocates the shared memory based on the memory size.

In the REE, related information of the shared memory is sent to the TEE.

Optionally, the related information of the shared memory includes at least a physical address range of the shared memory.

Optionally, an information transmission channel in the prior art may be used to send the related information of the shared memory to the TEE. For example, the transmission channel is an REE communication agent and a TEE communication agent in the architecture shown in FIG. 1B.

Optionally, the data processing method provided in this embodiment may further include:

After the CA completes interaction with the TA, in the REE, the untrusted processing module releases the shared memory.

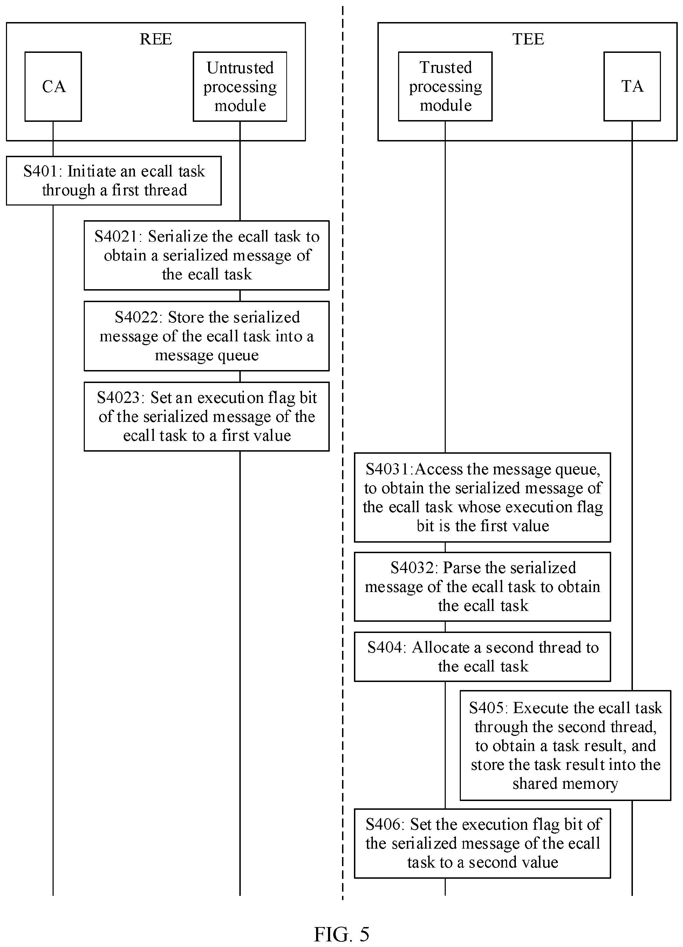

Optionally, based on the embodiment shown in FIG. 4, FIG. 5 is another flowchart of a data processing method according to an embodiment of this application. Implementations of S402 and S403 are provided. S402 includes S4021 to S4023. S403 includes S4031 and S4032. For S401 and S403 to S405, refer to the description in the embodiment shown in FIG. 4. Details are not described herein again.

As shown in FIG. 5, the data processing method provided in this embodiment may include the following steps.

S401: In an REE, a CA initiates an ecall task through a first thread.

S4021: In the REE, an untrusted processing module serializes the ecall task to obtain a serialized message of the ecall task.

For a meaning of serialization, refer to the foregoing related descriptions in this application. Details are not described herein again.

S4022: In the REE, the untrusted processing module stores the serialized message of the ecall task in a message queue. The message queue is stored into a shared memory, and is used to store serialized messages respectively corresponding to a plurality of ecall tasks initiated by the CA.

S4023: In the REE, the untrusted processing module sets an execution flag bit of the serialized message of the ecall task to a first value.

The first value indicates that a state of the serialized message in the message queue is a to-be-executed state, so that a TEE side obtains an unprocessed ecall task from the message queue after accessing the shared memory.

The first value and a second value are relative concepts. The second value indicates that the state of the serialized message in the message queue is an executed state, to notify the REE side that execution of the ecall task is completed.

Values of the first value and the second value are different. The values of the first value and the second value are not limited in this embodiment of this application. For example, the first value is 0, and the second value is 1; or the first value is 1, and the second value is 0.

S4031: In the TEE, a trusted processing module accesses the message queue, to obtain the serialized message of the ecall task whose execution flag bit is the first value.

A rule for accessing the message queue by the trusted processing module on the TEE side is not limited in this embodiment. For example, an unprocessed ecall task whose execution flag bit is the first value in the message queue may be found in a polling manner or in a manner of configuring a specified thread to monitor a corresponding message queue.

S4032: In the TEE, the trusted processing module parses the serialized message of the ecall task to obtain the ecall task.

Parsing and deserialization have a same meaning. The serialized message of the ecall task that has not been processed is parsed to restore the serialized message to an ecall function called by the ecall task.

S404: In the TEE, the trusted processing module allocates a second thread to the ecall task.

S405: In the TEE, the TA executes the ecall task through the second thread, to obtain a task result, and stores the task result into the shared memory.

S406: In the TEE, the trusted processing module sets the execution flag bit of the serialized message of the ecall task to the second value.

It can be learned that the data processing method provided in this embodiment uses the GP architecture as an example, and is applicable to a scenario in which a first application of the terminal device initiates a task through a first thread in a first execution environment. The shared memory is requested in advance for the first application in the untrusted execution environment. Both the untrusted execution environment and the trusted execution environment can access the shared memory. The shared memory stores the message queue and related data in a task execution process. Whether the task has been processed is indicated by setting an execution flag bit of the task to different values. The shared memory is applied for in advance, so that data transfer between the untrusted execution environment and the trusted execution environment is implemented, and data copy is not required, thereby shortening a data transfer path and improving data processing efficiency. The first thread used by the first application to initiate the task and the second thread used by the second application to execute the task are set to be bound to different processing units, thereby reducing CPU switching overheads and improving data processing efficiency. In addition, because the second thread is created in the second execution environment, CPU switching overheads are reduced, and data processing efficiency is improved.

In another embodiment of this application, a data processing method is provided, and is performed by a terminal device. A trusted execution environment and an untrusted execution environment are deployed in the terminal device. A manner of implementing the trusted execution environment by the terminal device is not limited in this embodiment. For example, the terminal device may use a GP architecture, or may use an SGX architecture. An application and a processing module are deployed in both the trusted execution environment and the untrusted execution environment. An application deployed in the trusted execution environment is referred to as a trusted application, and a processing module is referred to as a trusted processing module. An application deployed in the untrusted execution environment is referred to as an untrusted application, and a processing module is referred to as an untrusted processing module.

The data processing method provided in this embodiment is applicable to a scenario in which a first application of the terminal device initiates a task through a first thread in a first execution environment.

When the terminal device uses different architectures, and the first execution environment and the second execution environment are different, the data processing method provided in this embodiment may be applied to at least the foregoing Scenario 1 to Scenario 4.

For ease of description, in this embodiment, Scenario 1 is used as an example to describe the data processing method provided in this embodiment.

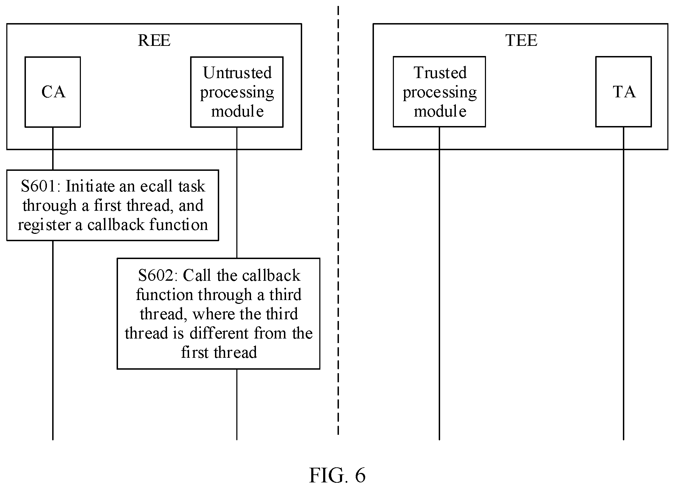

For example, FIG. 6 is still another flowchart of a data processing method according to an embodiment of this application. As shown in FIG. 6, the data processing method provided in this embodiment may include the following steps.

S601: In an REE, a CA initiates an ecall task through a first thread, and registers a callback function.

Specifically, the CA initiates the ecall task, and calls a software function provided by a TA in a TEE. The first thread is a thread created by the CA in the REE. An address of the callback function is provided by the CA when the CA initiates the ecall task.

The ecall task may include but is not limited to the following information: a function name of a called ecall function, an incoming parameter, an outgoing parameter, and a return value type of the function. The ecall task also includes the callback function.

S602: In the REE, an untrusted processing module calls the callback function through a third thread. The third thread is different from the first thread.

Specifically, the third thread is a thread created by the CA in the REE. An REE side determines that execution of the ecall task on a TEE side ends, and calls the callback function through the third thread, to automatically complete processing of an outgoing parameter and a return value of a function that are returned by the TEE side.

It can be learned that according to the data processing method provided in this embodiment, the CA registers the callback function when initiating the ecall task through the first thread, and after initiating the ecall task, the CA does not need to wait for a task result of executing the ecall task on a TEE side. Instead, subsequent application service logic processing may be performed through the first thread. After the ecall task executed on the TEE side is complete, the REE side calls the callback function through the third thread to automatically process the outgoing parameter and the function return value returned by the TEE side. The callback function is registered, to shorten the waiting time after the REE side initiates the ecall task is shortened, and resolve a problem that execution of the ecall task on the TEE side blocks execution of application service logic on the REE side.

Optionally, a quantity of third threads is less than or equal to a quantity of ecall tasks initiated by the CA.

Descriptions are provided below by using examples.

If the quantity of third threads is equal to the quantity of ecall tasks initiated by the CA, because the quantity of third threads is equal to the quantity of ecall tasks initiated by the CA, each third thread may execute one ecall task, thereby improving data processing efficiency. It is assumed that the CA initiates three ecall tasks: an ecall task 1 to an ecall task 3. There are three third threads: a thread 31 to a thread 33. In an implementation, the thread 31 calls a callback function corresponding to the ecall task 1, the thread 32 calls a callback function corresponding to the ecall task 2, and the thread 33 calls a callback function corresponding to the ecall task 3. A correspondence between the third thread and the callback function of the ecall task is not limited in this embodiment.

If the quantity of third threads is less than the quantity of ecall tasks initiated by the CA, at least one third thread exists, and the third thread calls callback functions corresponding to at least two ecall tasks. It is assumed that the CA initiates three ecall tasks: an ecall task 1 to an ecall task 3. There are two third threads: a thread 31 and a thread 32. In an implementation, the thread 31 calls callback functions corresponding to the ecall task 1 and the ecall task 2, and the thread 32 calls a callback function corresponding to the ecall task 3. In another implementation, the thread 31 calls a callback function corresponding to the ecall task 1, and the thread 32 calls callback functions corresponding to the ecall task 2 and the ecall task 3. A correspondence between the third thread and the callback function of the ecall task is not limited in this embodiment. Optionally, when calling callback functions corresponding to the at least two ecall tasks, one third thread may sequentially call the callback functions according to a time sequence.

In another embodiment of this application, a data processing method is provided, and is performed by a terminal device. A trusted execution environment and an untrusted execution environment are deployed in the terminal device. A manner of implementing the trusted execution environment by the terminal device is not limited in this embodiment. For example, the terminal device may use a GP architecture, or may use an SGX architecture. An application and a processing module are deployed in both the trusted execution environment and the untrusted execution environment. An application deployed in the trusted execution environment is referred to as a trusted application, and a processing module is referred to as a trusted processing module. An application deployed in the untrusted execution environment is referred to as an untrusted application, and a processing module is referred to as an untrusted processing module.

The data processing method provided in this embodiment is applicable to a scenario in which a first application of the terminal device initiates a task through a first thread in a first execution environment. The first execution environment is the untrusted execution environment, the first application is the untrusted application, the second execution environment is the trusted execution environment, the second application is the trusted application, and the task is an ecall task.

When the terminal device uses different architectures, the data processing method provided in this embodiment may be applied to at least the foregoing Scenario 1 and Scenario 3.

For ease of description, in this embodiment, Scenario 1 is used as an example to describe the data processing method provided in this embodiment.

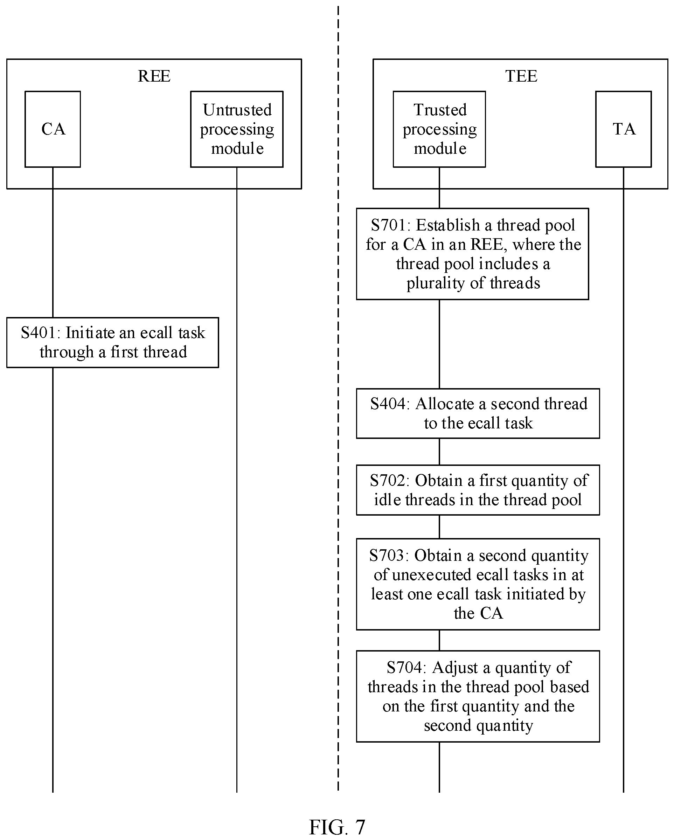

For example, FIG. 7 is yet another flowchart of a data processing method according to an embodiment of this application. As shown in FIG. 7, the data processing method provided in this embodiment may include the following steps.

S701: In a TEE, a trusted processing module establishes a thread pool for a CA in an REE, where the thread pool includes a plurality of threads.

Each thread in the thread pool is created in the TEE.

For a meaning of the thread pool, refer to the foregoing related descriptions in this application. Details are not described herein again.

S401: In the REE, a CA initiates an ecall task through a first thread.

S404: In the TEE, the trusted processing module allocates a second thread to the ecall task.

The second thread is an idle thread in the thread pool.

For S401 and S404, refer to the embodiment shown in FIG. 4. Details are not described herein again.

S702: In the TEE, the trusted processing module obtains a first quantity of idle threads in the thread pool.

S703: In the TEE, the trusted processing module obtains a second quantity of unexecuted ecall tasks in at least one ecall task initiated by the CA.

S704: In the TEE, the trusted processing module adjusts a quantity of threads in the thread pool based on the first quantity and the second quantity.

According to the data processing method provided in this embodiment, in the TEE, the thread pool is established for the CA in the REE, and the thread pool includes the plurality of threads. The quantity of threads in the thread pool is adjusted in real time based on the first quantity of idle threads in the thread pool and the second quantity of unprocessed ecall tasks initiated by the CA, thereby avoiding a case in which no thread is available on a TEE side because the CA initiates a large quantity of ecall tasks. This also avoids CPU waste on the TEE side caused by a small quantity of ecall tasks initiated by the CA, improves thread management flexibility on the TEE side, improves resource utilization on the TEE side, and improves ecall task processing efficiency.

Optionally, in S704, that the trusted processing module adjusts the quantity of threads in the thread pool based on the first quantity and the second quantity in the TEE may include:

If the first quantity is greater than the second quantity, and the total quantity of threads in the thread pool is greater than a minimum threshold, in the TEE, the trusted processing module destroys one thread in the thread pool. Alternatively, if the first quantity is less than the second quantity, and the total quantity of threads in the thread pool is less than a maximum threshold, in the TEE, the trusted processing module creates at least one thread in the thread pool. A quantity of the at least one thread is less than or equal to a difference between the maximum threshold and the total quantity of threads in the thread pool.

The quantity of the at least one created thread is not limited in this embodiment. However, after the at least one thread is created, it needs to be ensured that the total quantity of all threads in the thread pool is less than or equal to the maximum threshold.

Optionally, in an implementation, the quantity of the at least one thread is 1. That is, one thread is created each time.

Optionally, in another implementation, the quantity of the at least one thread is the minimum threshold.

An example is used for description. It is assumed that the first quantity is 3, the second quantity is 5, the maximum threshold is 10, the minimum threshold is 2, and the total quantity of threads in the thread pool is currently 7. In this case, the trusted processing module may create a minimum threshold quantity of threads in the thread pool, that is, create two threads. After the two threads are created, the total quantity of threads in the thread pool is updated to 7+2=9. Then, values of the first quantity and the second quantity continue to be determined. It is assumed that the first quantity is 2, the second quantity is 3, and the total quantity of threads in the thread pool is currently 9. In this case, if the trusted processing module creates a minimum threshold quantity of threads in the thread pool, the total quantity of threads in the thread pool is updated to 9+2=11, which exceeds the maximum threshold 10. Therefore, the trusted processing module may create one thread in the thread pool. After the one thread is created, the total quantity of threads in the thread pool is updated to 9+1=10, reaching the maximum threshold.

The quantity of threads in the thread pool has a minimum value and a maximum value, which are respectively referred to as the minimum threshold and the maximum threshold.

Specifically, when a quantity of idle threads in the thread pool is large and is greater than a quantity of unprocessed ecall tasks initiated by the CA, one thread is destroyed in the thread pool until the quantity of threads in the thread pool reaches the minimum threshold. This ensures that a thread in the TEE is used to execute the ecall task initiated by the CA, thereby avoiding a case in which the ecall task cannot be executed.

When the quantity of idle threads in the thread pool is small and is less than the quantity of unprocessed ecall tasks initiated by the CA, at least one thread is created in the thread pool, and the quantity of threads in the thread pool is gradually or quickly increased, until the quantity of threads in the thread pool reaches the maximum threshold. A maximum value of threads that are in the TEE and that execute the ecall task initiated by the CA is limited, thereby avoiding a waste of resources on the TEE side.

Optionally, that the trusted processing module establishes the thread pool for the CA in the REE in S701 may include:
In the REE, the minimum threshold, the maximum threshold, and an intermediate threshold are sent to the TEE. The intermediate threshold is greater than the minimum threshold and less than the maximum threshold.

In the TEE, the trusted processing module establishes the thread pool for the CA, and a quantity of threads in the thread pool is the intermediate threshold.

Optionally, an information transmission channel in the prior art may be used to send the minimum threshold, the maximum threshold, and the intermediate threshold to the TEE. For example, the transmission channel is an REE communication agent and a TEE communication agent in the architecture shown in FIG. 1B.

In this implementation, the TEE side establishes the thread pool for the CA based on the minimum threshold, the maximum threshold, and the intermediate threshold that are set on the REE side, thereby improving reasonableness and accuracy of managing the thread pool.

Optionally, the data processing method provided in this embodiment may further include:
After the CA completes interaction with the TA, in the REE, the untrusted processing module calls a destruction interface function. The destruction interface function is used to indicate to destroy all threads in the thread pool in the TEE.

In the TEE, the trusted processing module destroys all threads in the thread pool based on the destruction interface function.

It should be noted that embodiments of this application may be combined with each other, and a combination manner is not limited. For example, the embodiment shown in FIG. 4 and the embodiment shown in FIG. 6 may be combined with each other. For another example, when the first execution environment is an untrusted execution environment and the second execution environment is a trusted execution environment, the embodiment shown in FIG. 4 and the embodiment shown in FIG. 7 may be combined with each other.

It may be understood that, to implement the foregoing functions, the terminal device includes corresponding hardware and/or software modules for performing the functions. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments of this application, the terminal device may be divided into functional modules based on the foregoing method examples. For example, each functional module corresponding to each function may be obtained through division, or two or more functions may be integrated into one processing module. It should be noted that, in embodiments of this application, module division is an example, and is merely a logical function division. In actual implementation, another division manner may be used. It should be noted that a name of a module in embodiments of this application is an example, and the name of the module is not limited during actual implementation.

As shown in FIG. 2, an embodiment of this application provides a terminal device. A trusted execution environment and an untrusted execution environment are deployed in the terminal device. A trusted application and a trusted processing module are deployed in the trusted execution environment. An untrusted application and an untrusted processing module are deployed in the untrusted execution environment.

A first processing module in a first execution environment is configured to store a task initiated by a first application through a first thread into a shared memory, where the task is used to call a software function provided by a second application in a second execution environment, the shared memory is a physical memory region that is applied for the first application in advance in the untrusted execution environment and that is used to be accessed by the untrusted execution environment and the trusted execution environment. The first execution environment is the untrusted execution environment, the second execution environment is the trusted execution environment, the first processing module is the untrusted processing module, and the second processing module is the trusted processing module, or the first execution environment is the trusted execution environment, the second execution environment is the untrusted execution environment, the first processing module is the trusted processing module, and the second processing module is the untrusted processing module.

The second processing module in the second execution environment is configured to obtain the task from the shared memory.

The second processing module in the second execution environment is configured to allocate a second thread to the task, where the second thread is created in the second execution environment, and the second thread and the first thread are bound to different processing units.

The second application in the second execution environment is configured to execute the task through the second thread, to obtain a task result, and store the task result into the shared memory.

Optionally, the first processing module in the first execution environment is configured to:
serialize the task in the first execution environment to obtain a serialized message of the task;
store, in the first execution environment, the serialized message of the task in a message queue, where the message queue is stored into the shared memory and is used to store serialized messages respectively corresponding to a plurality of tasks initiated by the first application; and
sett, in the first execution environment, an execution flag bit of the serialized message of the task to a first value, where the first value indicates that a state of the serialized message is a to-be-executed state.

Optionally, the second processing module in the second execution environment is configured to:
access, in the second execution environment, the message queue, and obtain the serialized message of the task whose execution flag bit is the first value; and
parse, in the second execution environment, the serialized message of the task to obtain the task.

Optionally, the second processing module in the second execution environment is further configured to:
after that the second application executes the task through the second thread, to obtain a task result, and stores the task result into the shared memory, set, in the second execution environment, the execution flag bit of the serialized message of the task to a second value, where the second value indicates that the state of the serialized message is an executed state.

Optionally, the first application in the first execution environment is configured to:
initiate, in the first execution environment, the task through the first thread, and register a callback function.

Optionally, the first processing module in the first execution environment is further configured to:
call, in the first execution environment, the callback function through a third thread, where the third thread is different from the first thread.

Optionally, a quantity of the third threads is less than or equal to a quantity of tasks initiated by the first application.

Optionally, the task includes an incoming parameter and an outgoing parameter, and the incoming parameter and the outgoing parameter are stored into the shared memory.

The first processing module in the first execution environment is further configured to:
before storing the task initiated by the first application through the first thread into the shared memory, obtain, in the first execution environment, a first reference address of the shared memory in the first execution environment, a first input address of the incoming parameter in the first execution environment, and a first output address of the outgoing parameter in the first execution environment; and
convert, in the first execution environment, the first input address into a first input offset relative to the first reference address, and convert the first output address into a first output offset relative to the first reference address.

Optionally, the second processing module in the second execution environment is further configured to:
before the second application executes the task through the second thread, obtain, in the second execution environment, a second reference address of the shared memory in the second execution environment; and
obtain, in the second execution environment, a second input address of the incoming parameter in the second execution environment based on the second reference address and the first input offset, and obtain a second output address of the outgoing parameter in the second execution environment based on the second reference address and the first output offset.

Optionally, the first execution environment is the trusted execution environment, the second execution environment is the untrusted execution environment, and the task is an ocall task.

Optionally, the first execution environment is the untrusted execution environment, the second execution environment is the trusted execution environment, and the task is an ecall task.

Optionally, a thread pool is established in the second execution environment for the first application, the thread pool includes a plurality of threads, and the threads in the thread pool are created in the second execution environment.

The second thread is an idle thread in the thread pool.

Optionally, the second processing module in the second execution environment is further configured to:
obtain, in the second execution environment, a first quantity of idle threads in the thread pool;
obtain, in the second execution environment, a second quantity of tasks that are not executed in at least one task initiated by the first application; and
adjust, in the second execution environment, a quantity of threads in the thread pool based on the first quantity and the second quantity.

Optionally, the second processing module in the second execution environment is configured to:
destroy, in the second execution environment, one thread in the thread pool if the first quantity is greater than the second quantity and the total quantity of threads in the thread pool is greater than a minimum threshold; or
create, in the second execution environment, at least one thread in the thread pool if the first quantity is less than the second quantity and the total quantity of threads in the thread pool is less than a maximum threshold, where a quantity of the at least one thread is less than or equal to a difference between the maximum threshold and the total quantity of threads in the thread pool.

Optionally, the first processing module in the first execution environment is further configured to:
before storing the task initiated by the first application through the first thread into the shared memory, send, in the first execution environment, a minimum threshold, a maximum threshold, and an intermediate threshold to the second execution environment, where the intermediate threshold is greater than the minimum threshold and less than the maximum threshold.

The second processing module in the second execution environment is further configured to:
establish, in the second execution environment, the thread pool for the first application, where a quantity of threads in the thread pool is the intermediate threshold.

Optionally, the first processing module in the first execution environment is further configured to:
before storing the task initiated by the first application through the first thread into the shared memory, obtain, in the first execution environment, a memory size of the shared memory;
allocate, in the first execution environment, the shared memory based on the memory size; and
send, in the first execution environment, related information of the shared memory to the second execution environment.

Optionally, the memory size includes a first memory size occupied by the message queue and a second memory size occupied by application data, and the message queue is stored into the shared memory and is used to store the serialized messages respectively corresponding to the plurality of tasks initiated by the first application.

The shared memory includes first memory space of the first memory size and second memory space of the second memory size.

Optionally, addresses of the first memory space and the second memory space are contiguous.

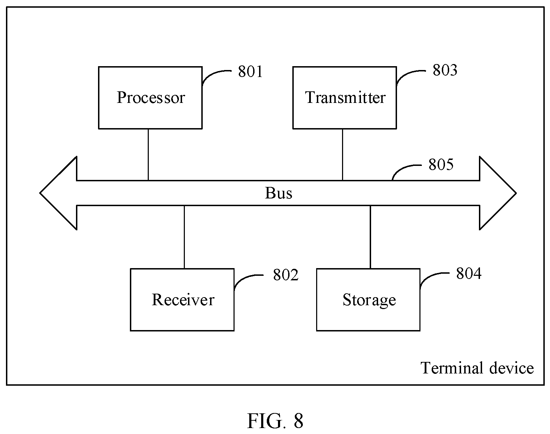

FIG. 8 is a diagram of another structure of a terminal device according to an embodiment of this application. The terminal device includes a processor 801, a storage 804, and a bus 805. Optionally, the terminal device may further include a receiver 802 and a transmitter 803. The processor 801 includes one or more processing cores. The processor 801 runs a software program and a module, to execute various functional applications and process information. The storage 804 may be configured to store at least one program instruction, and the processor 801 is configured to execute the at least one program instruction, to implement the technical solution in the foregoing embodiments. The receiver 802 and the transmitter 803 may be implemented as a communication component, and the communication component may be a baseband chip. The storage 804 is connected to the processor 801 through the bus 805. An implementation principle and technical effect thereof are similar to those of the foregoing method-related embodiment. Details are not described herein again.

A person skilled in the art may understand that, for ease of descriptions, FIG. 8 shows only one storage and one processor. In an actual terminal device, there may be a plurality of processors and storages. The storage may also be referred to as a storage medium, a storage device, or the like. This is not limited in embodiments of this application.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The storage is any other medium that can be configured to carry or store expected program code in a form of an instruction structure or a data structure and that can be accessed by a computer, but is not limited thereto.

The storage in embodiments of this application may alternatively be a circuit or any other apparatus that can implement a storage function, and is configured to store the program instructions and/or the data. All or a part of the method provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

An embodiment of this application provides a computer program product. When the computer program product runs on a terminal device, the terminal device is enabled to perform the technical solutions in the foregoing embodiments. An implementation principle and a technical effect thereof are similar to those of the foregoing related embodiment, and details are not described herein again.

An embodiment of this application provides a computer-readable storage medium. The computer-readable storage medium stores program instructions. When the program instructions are executed by a terminal device, the terminal device is enabled to perform the technical solutions in the foregoing embodiments. An implementation principle and a technical effect thereof are similar to those of the foregoing related embodiment, and details are not described herein again.

In conclusion, the foregoing embodiments are merely intended for describing the technical solutions of this application, but not for limiting this application. Although this application is described in detail with reference to the foregoing embodiments, a person of ordinary skill in the art should understand that they may still make modifications to the technical solutions described in the foregoing embodiments or make equivalent replacements to some technical features thereof, without departing from the scope of the technical solutions of embodiments of this application.

## Claims

1. A data processing method, applied to a terminal device, wherein a trusted execution environment and an untrusted execution environment are deployed in the terminal device, and the method comprises:
storing, in a first execution environment, a task initiated by a first application through a first thread into a shared memory, wherein the task is used to call a software function provided by a second application in a second execution environment, the shared memory is a physical memory region that is applied for the first application in advance in the untrusted execution environment and that is used to be accessed by the untrusted execution environment and the trusted execution environment, and the first execution environment is the untrusted execution environment, and the second execution environment is the trusted execution environment, or the first execution environment is the trusted execution environment, and the second execution environment is the untrusted execution environment;
obtaining, in the second execution environment, the task from the shared memory;
allocating a second thread to the task in the second execution environment, wherein the second thread is created in the second execution environment, and the second thread and the first thread are bound to different processing units; and
executing, by the second application in the second execution environment, the task through the second thread, to obtain a task result, and storing the task result into the shared memory.

2. The method according to claim 1, wherein the storing, in the first execution environment, the task into the shared memory comprises:
serializing the task in the first execution environment to obtain a serialized message of the task;
storing, in the first execution environment, the serialized message of the task in a message queue, wherein the message queue is stored into the shared memory and is used to store serialized messages respectively corresponding to a plurality of tasks initiated by the first application; and
setting, in the first execution environment, an execution flag bit of the serialized message of the task to a first value, wherein the first value indicates that a state of the serialized message is a to-be-executed state.

3. The method according to claim 2, wherein the obtaining, in the second execution environment, the task from the shared memory comprises:
accessing, in the second execution environment, the message queue, and obtaining the serialized message of the task whose execution flag bit is the first value; and
parsing, in the second execution environment, the serialized message of the task to obtain the task.

4. The method according to claim 2, wherein after the executing, by the second application in the second execution environment, the task through the second thread, to obtain a task result, and storing the task result into the shared memory, the method further comprises:
setting, in the second execution environment, the execution flag bit of the serialized message of the task to a second value, wherein the second value indicates that the state of the serialized message is an executed state.

5. The method according to any one of claims 1 to 4, wherein before the storing, in a first execution environment, a task initiated by a first application through a first thread into a shared memory, the method further comprises:
initiating, by the first application program in the first execution environment, the task through the first thread, and registering a callback function.

6. The method according to claim 5, wherein the method further comprises:
calling, in the first execution environment, the callback function through a third thread, wherein the third thread is different from the first thread.

7. The method according to claim 6, wherein a quantity of the third threads is less than or equal to a quantity of tasks initiated by the first application.

8. The method of any one of claims 1 to 7, wherein the task comprises an incoming parameter and an outgoing parameter, and the incoming parameter and the outgoing parameter are stored into the shared memory; and
before the storing, in a first execution environment, a task initiated by a first application through a first thread into a shared memory, the method further comprises:
obtaining, in the first execution environment, a first reference address of the shared memory in the first execution environment, a first input address of the incoming parameter in the first execution environment, and a first output address of the outgoing parameter in the first execution environment; and
converting, in the first execution environment, the first input address into a first input offset relative to the first reference address, and converting the first output address into a first output offset relative to the first reference address.

9. The method according to claim 8, wherein before the executing, by the second application in the second execution environment, the task through the second thread, the method further comprises:
obtaining, in the second execution environment, a second reference address of the shared memory in the second execution environment; and
obtaining, in the second execution environment, a second input address of the incoming parameter in the second execution environment based on the second reference address and the first input offset, and obtaining a second output address of the outgoing parameter in the second execution environment based on the second reference address and the first output offset.

10. The method according to any one of claims 1 to 9, wherein the first execution environment is the trusted execution environment, the second execution environment is the untrusted execution environment, and the task is an ocall task.

11. The method according to any one of claims 1 to 9, wherein the first execution environment is the untrusted execution environment, the second execution environment is the trusted execution environment, and the task is an ecall task.

12. The method according to claim 11, wherein a thread pool is established in the second execution environment for the first application, the thread pool comprises a plurality of threads, and the threads in the thread pool are created in the second execution environment; and
the second thread is an idle thread in the thread pool.

13. The method according to claim 12, wherein the method further comprises:
obtaining, in the second execution environment, a first quantity of idle threads in the thread pool;
obtaining, in the second execution environment, a second quantity of tasks that are not executed in at least one task initiated by the first application; and
adjusting, in the second execution environment, a quantity of threads in the thread pool based on the first quantity and the second quantity.

14. The method according to claim 13, wherein the adjusting, in the second execution environment, a quantity of threads in the thread pool based on the first quantity and the second quantity comprises:
destroying, in the second execution environment, one thread in the thread pool if the first quantity is greater than the second quantity and the total quantity of threads in the thread pool is greater than a minimum threshold; or
creating, in the second execution environment, at least one thread in the thread pool if the first quantity is less than the second quantity and the total quantity of threads in the thread pool is less than a maximum threshold, wherein a quantity of the at least one thread is less than or equal to a difference between the maximum threshold and the total quantity of threads in the thread pool.

15. The method according to claim 12, wherein before the storing, in a first execution environment, a task initiated by a first application through a first thread into a shared memory, the method further comprises:
sending, in the first execution environment, a minimum threshold, a maximum threshold, and an intermediate threshold to the second execution environment, wherein the intermediate threshold is greater than the minimum threshold and less than the maximum threshold; and
establishing, in the second execution environment, the thread pool for the first application, wherein a quantity of threads in the thread pool is the intermediate threshold.

16. The method according to claim 11, wherein before the storing, in a first execution environment, a task initiated by a first application through a first thread into a shared memory, the method further comprises:
obtaining, in the first execution environment, a memory size of the shared memory;
allocating, in the first execution environment, the shared memory based on the memory size; and
sending, in the first execution environment, related information of the shared memory to the second execution environment.

17. The method according to claim 16, wherein the memory size comprises a first memory size occupied by the message queue and a second memory size occupied by application data, and the message queue is stored into the shared memory and is used to store the serialized messages respectively corresponding to the plurality of tasks initiated by the first application; and
the shared memory comprises first memory space of the first memory size and second memory space of the second memory size.

18. The method according to claim 17, wherein addresses of the first memory space and the second memory space are contiguous.

19. A terminal device, comprising a processor, wherein the processor is coupled to a storage, and reads instructions in the storage, to enable, based on the instructions, the terminal device to perform the method according to any one of claims 1 to 18.

20. A computer-readable storage medium, wherein the computer-readable storage medium stores computer instructions, and when the computer instructions are run on a terminal device, the terminal device is enabled to perform the method according to any one of claims 1 to 18.
